# FASCICULE DE BREVET EUROPEEN

(11) **EP 0 662 743 B1**
(45) Date de publication et mention de la délivrance du brevet: **20.09.2000**
(21) Numéro de dépôt: 94403022.0
(22) Date de dépôt: 26.12.1994
(51) Int. Cl.: H02H 3/08

(54) **Dispositif électronique de protection thermique**
Elektronische Einrichtung zum thermischen Schutz
Electronic device for thermal protection

(30) Priorité: 10.01.1994 FR 9400240
(43) Date de publication de la demande: 12.07.1995
(73) Titulaire: Schneider Electric Industries SA, 92500 Rueil-Malmaison (FR)
(72) Inventeur: Baurand, Gilles, F-78360 Montesson la Borde (FR); Stentz, Antoine, F-92500 Rueil-Malmaison (FR)
(74) Mandataire: Saint Martin, René

(56) Documents cités:
- EP-A- 0 214 025
- EP-A- 0 477 959
- CH-A- 534 444
- DE-A- 1 563 736
- FR-A- 2 309 063
- FR-A- 2 439 405
- FR-A- 2 641 410

## Description

La présente invention se rapporte à un dispositif électronique de protection thermique destiné à interrompre l'alimentation sur une ligne polyphasée, comprenant des transformateurs d'intensité installés chacun sur un fil de ligne et associés à des redresseurs pour délivrer à un détecteur thermique pourvu d'une résistance la somme des courants redressés et un circuit de traitement recevant le signal du détecteur thermique de manière à fournir un ordre de commande en fonction de la surcharge. Un tel dispositif est divulgué dans la demande de brevet FR-A-2 309 063.

On utilise, pour protéger les machines électriques, des relais thermiques qui contrôlent les surcharges appliquées sur les phases ou les déséquilibres ou absences de phase. Un relais thermique usuel comprend, pour chaque phase, un bilame échauffé par le courant de phase. Quand une surcharge se produit sur une phase, le bilame de cette phase surchargée fléchit et agit mécaniquement sur un mécanisme de déclenchement qui provoque l'ouverture de contacts de manière à couper l'alimentation de la charge. Le déclenchement en cas de déséquilibre ou d'absence de phase est obtenu par un dispositif différentiel.

Ces relais thermiques sont difficilement utilisables pour des courants élevés du fait que l'échauffement de chaque bilame et donc le courant de déclenchement sont mal maîtrisés, des échauffements parasites se produisant.

On utilise également, pour protéger les machines, des relais électroniques tels que celui décrit dans le brevet FR 2.586.489 ou le brevet CH 534 444. Ces relais comportent, sur chaque phase, un capteur de courant donnant une image du courant de phase. Un circuit électronique de traitement reçoit et traite les images des courants de phases dans le but de délivrer un ordre de déclenchement.

On connaît par le brevet FR 2.641.410 un relais électronique qui est équipé d'un détecteur thermique comprenant, pour chaque phase, un élément résistif chauffant parcouru par le courant de phase et thermiquement couplé à un capteur de température au moyen d'un corps de couplage thermique. Ce détecteur thermique permet de mémoriser de façon simple l'état thermique de la charge protégée par le relais.

L'invention a notamment pour but de fournir un dispositif électronique de protection thermique pour une ligne polyphasée piloté par un circuit numérique et un seul détecteur thermique à résistance et capteur de température, ce détecteur travaillant avec une puissance relativement constante ce qui procure une réduction des échauffements, une économie de conception et ne nécessite qu'un seul réglage à chaud. La résistance du détecteur peut être réalisée par sérigraphie.

Le dispositif selon l'invention est caractérisé par le fait que la résistance est thermiquement couplée à un capteur de température connecté au circuit de traitement de type numérique et que des moyens électroniques pilotés en modulation de largeur d'impulsions par le circuit numérique de traitement ajustent le courant sommé qui est injecté sur la résistance du détecteur thermique.

Selon une caractéristique, chaque sortie d'un redresseur attaque par un circuit électronique des entrées du circuit de traitement numérique.

Selon une autre caractéristique, la résistance du détecteur thermique qui reçoit le courant sommé et ajusté alimente un circuit d'alimentation dont la sortie d'alimentation est injectée sur l'entrée d'alimentation du circuit de traitement numérique.

Selon une autre caractéristique, le circuit de traitement numérique à pilote, par un circuit de commande, un appareil interrupteur.

L'invention va maintenant être décrite avec plus de détail en se référant à un mode de réalisation donné à titre d'exemple et représenté par les dessins annexés sur lesquels:
- la figure 1 est un schéma du relais de protection thermique électronique selon l'invention;
- les figures 2a, 2b, 2c représentent des diagrammes relatifs au circuit d'ajustage du courant appliqué au détecteur thermique.

Le dispositif de protection thermique ou relais thermique selon l'invention est destiné à interrompre le courant sur une ligne L₁, L₂, L₃ alimentant une charge triphasée constituée ici par un moteur électrique triphasé M, en cas de surcharge ou de déséquilibre entre les courants de phases.

Sur chaque fil de phase L₁ ou L₂ ou L₃ est disposé un capteur de courant du type transformateur d'intensité qui est repéré Ti₁ ou Ti₂ ou Ti₃ respectivement. Ces transformateurs sont des capteurs connus et habituellement utilisés pour les mesures de courants. Les sorties secondaires de chaque transformateur Ti₁ ou Ti₂ ou Ti₃ sont branchées sur un redresseur P₁ ou P₂ ou P_{3,} respectivement qui est constitué de diodes D₁, D₂, D₃, D₄ et qui fournit un courant redressé (ou continu) sur deux sorties O₁, O'₁ ou O₂, O'₂, ou O₃, O'₃ respectivement.

Les sorties positives O₁, O₂, O₃ des redresseurs P₁, P₂, P₃ sont connectées en commun à un élément résistif chauffant 11 (résistance) dont la seconde borne alimente un circuit d'alimentation 9. La résistance 11 reçoit donc sur une première borne le courant redressé (ou continu) des sorties positives O₁, O₂, O_{3.} des redresseurs. La sortie d'alimentation du circuit d'alimentation 9 est injectée sur l'entrée d'alimentation d'un circuit numérique à microprocesseur 3.

La résistance 11 fait partie d'un détecteur thermique 1 dans lequel elle est thermiquement coupée à un seul et même capteur de température 14 de type connu en soi. Une plaque de couplage thermique réalisée en un matériau résistant à la température et isolant électriquement sépare le capteur de température 14 et la résistance 11.

La résistance 11 est de préférence sérigraphiée sur la plaque de couplage thermique. Le capteur de température 14 peut également être sérigraphié sur la face qui est opposée à la face portant la résistance 11. En variante, le capteur 14 peut être indépendant de la plaque de couplage thermique tout en étant en contact direct avec celle-ci.

La résistance 11, la plaque de couplage thermique et le capteur de température 14 sont logés dans un boîtier en matériau électriquement isolant.

Le signal de sortie du capteur de température 14 est envoyé via un circuit 15 au circuit de traitement numérique à microprocesseur 3 qui traite les signaux reçus et délivre un ordre de déclenchement ou de commande.

Deux entrées du circuit de traitement numérique 3 reçoivent les informations données respectivement par un organe de réglage usine 6 et par un organe de réglage client 7 (courant i_{R}).

Le relais thermique 2 qui vient d'être décrit peut être associé à un contacteur C qui est installé sur les lignes L₁, L₂, L₃ de manière à couper l'alimentation du moteur sur ordre du relais thermique. Le circuit à microprocesseur 3 pilote un circuit de sortie 8 dont les sorties Tout ou Rien repérées 95 à 98 peuvent être raccordées aux entrées A1, A2 de la bobine du contacteur C.

Le courant de la sortie commune des redresseurs est ajusté par un circuit d'ajustage 4 constitué par un transistor T2 commandé en modulation de largeur d'impulsions (MLI) par le circuit numérique à microprocesseur 3. Un point de branchement du transistor T2 est alimenté par une sortie du circuit numérique 3, les autres points de branchement étant reliés à la masse et à la liaison 16 entre les sorties des redresseurs et la résistance 11 du détecteur thermique.

Chaque sortie négative des redresseurs P₁, P₂, P₃ attaque, au travers d'un circuit de traitement des déséquilibres 5, des entrées I₁, I₂, I₃ du circuit numérique à microprocesseur 3.

Le fonctionnement du relais thermique va maintenant être expliqué.

Les courants secondaires des transformateurs d'intensité Ti₁, Ti₂, Ti₃ sont redressés et additionnés pour former un courant i₁ qui est envoyé sur la résistance 11 du détecteur thermique. La résistance 11 est donc parcourue par un courant redressé qui est proportionnel à la somme des courants de phases redressés.

En fonction du courant de réglage client i_{R} déterminé par l'organe de réglage 7, le circuit numérique à microprocesseur 3 commande le transistor T₂ en modulation de largueur d'impulsions (MLI) de façon que la puissance dissipée dans le détecteur thermique 1 soit constante quel que soit la valeur du réglage client.

De cette manière, quel que soit le courant de réglage i_{R}, le détecteur thermique 1 travaille avec la même puissance. Les échauffements sont réduits lorsque iR=iR max. La technologie du détecteur thermique est rendue plus économique, un seul réglage à chaud est nécessaire et les échauffements sont réduits,

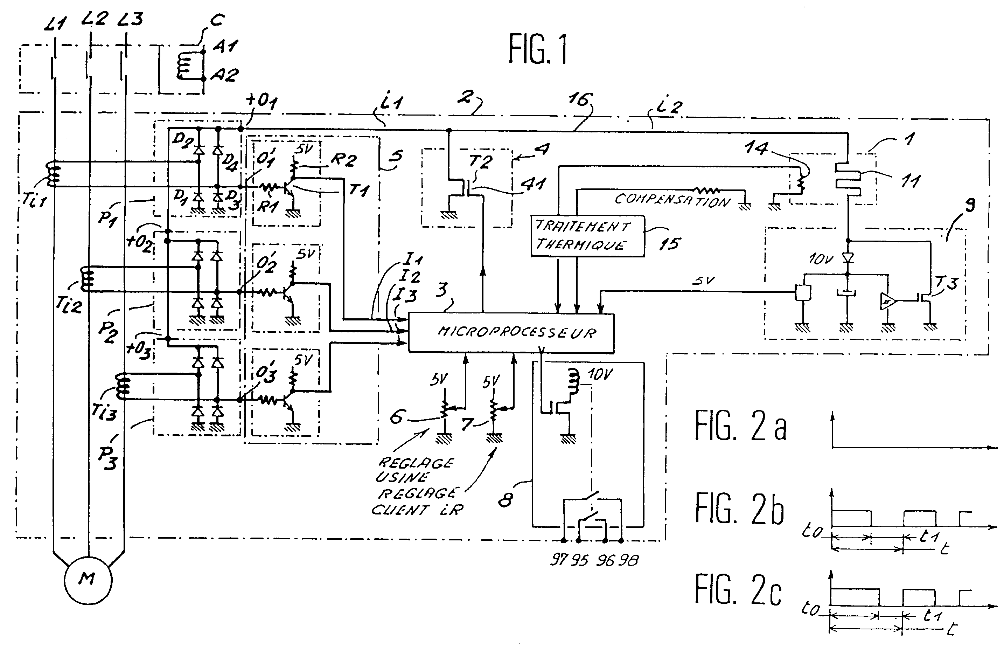

La figure 2 est un diagramme illustrant le fonctionnement du transistor T₂. Lorsque le courant i_{R} est égal à la valeur minimum, le transistor T₂ n'est pas mis en conduction (figure 2a). Lorsque le courant i_{R} excède la valeur minimum, le transistor T₂ est mis en conduction (figures 2b, 2c). Le rapport entre la durée de fermeture t₀ du transistor T₂ et la durée de la période t augmente avec la valeur de l'intensité i_{R}.

L'échauffement de la résistance 11 est mesuré par le capteur de température 14 qui donne, en permanence, l'image de l'échauffement thermique provoqué par les images des courants de phases. Lorsque l'image thermique donnée par le détecteur thermique 1 dépasse un seuil déterminé, le circuit à microprocesseur 3 génère un ordre de déclenchement qui commande, par l'intermédiaire du circuit de sortie 8, le contacteur C.

Lorsque le dispositif détecte un déséquilibre de phases ou une absence de phase, par l'intermédiaire du dispositif de traitement des déséquilibres 5, le microprocesseur du circuit 3 génère un ordre de déclenchement qui agit, par l'intermédiaire du circuit de sortie 8, sur la bobine du contacteur C.

En cas de coupure de l'alimentation, on conserve, grâce au détecteur thermique 1, une image thermique de l'échauffement du moteur.

Il est bien entendu que l'on peut, sans sortir du cadre de l'invention qui est défini par les revendications annexées, imaginer des variantes et des perfectionnements de détail et de même envisager l'emploi de moyens équivalents.

## Revendications

1. Dispositif électronique de protection thermique destiné à interrompre l'alimentation sur une ligne polyphasée (L₁, L₂, L₃), comprenant des transformateurs d'intensité (Ti₁, Ti₂, Ti₃) installés chacun sur un fil de ligne et associés à des redresseurs (P₁, P₂, P₃) pour délivrer à un détecteur thermique pourvu d'une résistance (11) la somme des courants (i₂) redressés et un circuit de traitement (3) recevant le signal du détecteur thermique de manière à fournir un ordre de commande en fonction de la surcharge, caractérisé par le fait que la résistance (11) est thermiquement couplée à un capteur de température (14) connecté au circuit de traitement (3) de type numérique et qu'un circuit électronique (4) piloté en modulation de largeur d'impulsions par le circuit numérique de traitement (3) ajuste le courant sommé (i₂) qui est injecté sur la résistance (11) du détecteur thermique (1).

2. Dispositif selon la revendication 1, caractérisé par le fait que chaque sortie d'un redresseur (P1, P2, P3) attaque par un circuit électronique (5) des entrées (I1, I2, I3) du circuit de traitement numérique (3).

3. Dispositif selon l'une quelconque des revendications précédentes, caractérisé par le fait que le circuit électronique (4) d'ajustage est constitué par un transistor (T₂).

4. Dispositif selon l'une quelconque des revendications précédentes, caractérisé par le fait que le circuit numérique à microprocesseur (3) pilote, par un circuit de commande (8), un appareil interrupteur (C).

5. Dispositif selon l'une quelconque des revendications précédentes, caractérisé par le fait que la résistance (11) du détecteur thermique qui reçoit le courant sommé et ajusté (i2) alimente un circuit d'alimentation (9) dont la sortie d'alimentation est injectée sur l'entrée d'alimentation du circuit numérique à microprocesseur (3).

## Claims

1. Electronic temperature protection device adapted to interrupt the power supply on a multiphase line (L₁, L₂, L₃) and comprising a thermal detector (1) included a resistive element (11) thermally coupled to a temperature sensor (14) that is connected to a digital processing circuit (3) adapted for outputting a control order as a function of the overload detected by temperature sensor (14), wherein said resistive element (11) of the thermal detector is connected to various rectifiers (R₁, R₂, R₃) each powered by a current transformer (Ti₁, Ti₂, Ti₃) installed on one line wire such that the sum of currents (i₂) delivered by said rectifiers (R₁, R₂, R₃) flows in said resistive element (11).

2. Device according to claim 1, wherein said sum of the currents (i₂) of said rectifiers that is injected on the resistive element of said thermal detector is adjusted by means of an electronic regulation circuit (4), controlled in pulse width modulation by the digital processing circuit (3).

3. Device according to claim 2, wherein said electronic regulation circuit (4) consists of a transistor (T₂).

4. Device according to claim 1, wherein said digital processing circuit (3) is a digital microprocessor circuit and drives a switch device through a control circuit (8).

5. Device according to claim 1, wherein the resistive element of the thermal detector (11), which receives on a first terminal the output current (i2) of said rectifiers, supplies from a second terminal a power supply circuit (9) and the power supply output of said power supply circuit is injected onto the power supply input of said digital processing circuit (3).

## Patentansprüche

1. Elektronische Wärmeschutzvorrichtung, um die Versorgung auf einer mehrphasigen Leitung (L₁, L₂, L₃) zu unterbrechen, mit Stromtransformatoren (Ti₁, Ti₂, Ti₃), die jeweils auf einem Leitungsdraht installiert und Gleichrichtern (P₁, P₂, P₃) zugeordnet sind, um an einen mit einem Widerstand (11) ausgerüsteten Thermodetektor die Summe der gleichgerichteten Ströme (i₂) zu liefern, und mit einem Verarbeitungskreis (3), der das Signal vom Thermodetektor empfängt, um einen Steuerbefehl entsprechend der Überlast zu liefern, dadurch gekennzeichnet, dass der Widerstand (11) thermisch an einem am Verarbeitungskreis (3) digitalen Typs angeschlossenen Temperatursensor (14) angekoppelt ist, und dass ein vom digitalen Verarbeitungskreis (3) per Pulsweitenmodulation gesteuerter Elektronikkreis (4) den summierten Strom (i₂) anpasst, der auf den Widerstand (11) des Thermodetektors (1) geführt wird.

2. Vorrichtung nach Anspruch 1, dadurch gekennzeichnet, dass jeder Ausgang eines Gleichrichters (P1, P2, P3) über einen Elektronikkreis (5) Eingänge (I1, I2, I3) des digitalen Verarbeitungskreises (3) angreift.

3. Vorrichtung nach einem der vorstehend genannten Ansprüche, dadurch gekennzeichnet, dass der elektronische Anpassungskreis (4) aus einem Transistor (T₂) besteht.

4. Vorrichtung nach einem der vorstehend genannten Ansprüche, dadurch gekennzeichnet, dass der Digitalkreis mit Mikroprozessor (3) über einen Steuerkreis (8) ein Schaltgerät (C) steuert.

5. Vorrichtung nach einem der vorstehend genannten Ansprüche, dadurch gekennzeichnet, dass der Widerstand (11) des Thermodetektors, der den summierten und angepassten Strom (i2) erhält, einen Versorgungskreis (9), dessen Versorgungsausgang auf den Versorgungseingang des Digitalkreises mit Mikroprozessor (3) geführt wird, versorgt.
